# EUROPÄISCHE PATENTSCHRIFT

(11) **EP 2 993 030 B1**
(45) Veröffentlichungstag und Bekanntmachung des Hinweises auf die Patenterteilung: **05.12.2018**
(21) Anmeldenummer: 15183713.5
(22) Anmeldetag: 03.09.2015
(51) Int. Cl.: B29C 67/00, B29C 70/24, B29C 65/00

(54) **FASERVERBUNDBAUTEIL, KLEBEANORDNUNG FÜR FASERVERBUNDBAUTEILE, SOWIE VERFAHREN ZUR HERSTELLUNG EINES FASERVERBUNDBAUTEILS UND EINER KLEBEANORDNUNG**
FIBER COMPOSITE COMPONENT, ADHESIVE FITTING FOR FIBER COMPOSITE COMPONENTS, AND METHOD FOR MANUFACTURING A FIBER COMPOSITE COMPONENT AND AN ADHESION ASSEMBLY
COMPOSANT EN COMPOSITE DE FIBRE, SYSTÈME ADHÉSIF POUR COMPOSANTS EN COMPOSITE DE FIBRE ET PROCÉDÉ DE FABRICATION D'UN COMPOSANT EN COMPOSITE DE FIBRE ET D'UN SYSTÈME ADHÉSIF

(30) Priorität: 05.09.2014 DE 102014012915
(43) Veröffentlichungstag der Anmeldung: 09.03.2016
(73) Patentinhaber: Airbus Defence and Space GmbH, 85521 Ottobrunn (DE)
(72) Erfinder: Meer, Thomas, 85658 Egmating (DE)
(74) Vertreter: LKGLOBAL Lorenz & Kopf PartG mbB Patentanwälte

(56) Entgegenhaltungen:
- EP-A1- 0 491 645
- WO-A1-95/23179
- US-A1- 2004 067 705

## Beschreibung

Die vorliegende Erfindung betrifft ein Verfahren zur Herstellung eines Faserverbundbauteils.

Faserverbundbauteile sowie Verfahren zur Herstellung von Faserverbundbauteilen sind aus dem Stand der Technik wohlbekannt. Faserverbundbauteile gewinnen gegenwärtig beispielsweise als Leichtbaustrukturen im Fahrzeugbau (einschließlich Luft- und Raumfahrzeuge) stark an Bedeutung.

Insbesondere zur Schaffung größerer Leichtbaustrukturen besteht oftmals das Erfordernis, mehrere bereits ausgehärtete Faserverbundbauteile nachträglich miteinander zu verbinden, was auch als "structural bonding" bzw. "secondary bonding" bezeichnet wird. Damit lassen sich in relativ einfacher Weise auch größere Gesamtstrukturen wie z. B. Flugzeugrümpfe oder Teile davon herstellen.

Alternativ oder zusätzlich besteht oftmals das Erfordernis, an einem bereits ausgehärteten Faserverbundbauteil nachträglich Anbauteile anzufügen, bei denen es sich ebenfalls um Faserverbundbauteile oder auch andersartige Bauteile (z. B. aus Metall oder Kunststoff) handeln kann. Im Flugzeugbau kommen als solche Anbauteile z. B. im Flugzeugrumpfbereich insbesondere z. B. Spanten, Stringer, Rippen, Clips und dergleichen in Betracht.

Im Flugzeugbau werden gegenwärtig Fügestellen im strukturellen Bereich mittels Nieten oder mittels Nieten und einer zusätzlichen Verklebung bewerkstelligt. Nieten bedürfen jedoch einem Mindestmaß an Bauteildicke und dem Setzen eines Bohrloches. Damit verbunden sind ein erhöhtes Gewicht, eine Schädigung der lasttragenden Fasern im Faserverbundbauteil und eine Belastung mit Bohrstaub (daraus resultierend z. B. Korrosions- und Kurzschlussgefahr).
Daher besteht ein Bedürfnis dafür, zukünftig verstärkt nachträgliche Klebeanbindungen zu realisieren und hierbei die Anzahl der verbauten Nieten weitgehend zu reduzieren oder ganz auf Nieten zu verzichten.
Grundsätzlich problematisch ist bei Klebeanordnungen der hier interessierenden Art jedoch die Sicherstellung einer ausreichenden Restfestigkeit bei einem teilweisen Versagen der Klebung (Schadenstoleranz). Heute stellt der angesprochene Niet den redundanten Lastpfad sicher.
US 2004/067705 A1 beschreibt einen Verbundstoff mit mehreren Lagen, wobei zwei Lagen dadurch miteinander verbunden werden, dass ein Faden in jeweils einen Oberflächenbereich der Lagen eingebracht ist, gemäß dem Oberbegriff des Anspruchs 1.

Es ist eine Aufgabe der vorliegenden Erfindung, ein Verfahren zum Herstellen eines Faserverbundbauteils anzugeben, so dass die damit hergestellten Faserverbundbauteile für das einfachere Herstellen einer Verbindung zu anderen Faserverbundbauteilen genutzt werden können. Ebenfalls hierin beschrieben ist ein Weg zur Schaffung einer Klebeanordnung für Faserverbundbauteile (d. h. mit wenigstens einem als Faserverbundbauteil ausgebildeten Klebepartner), bei welcher eine verbesserte Festigkeit und Zuverlässigkeit erzielt werden können.
Die Erfindung ist definiert durch das Verfahren gemäß dem unabhängigen Anspruch. Die abhängigen Ansprüche sind auf vorteilhafte Weiterbildungen der Erfindung gerichtet.

Im Folgenden wird auch ein Faserverbundbauteil sowie eine Klebeanordnung beschrieben. Es soll verstanden werden, dass diese Beschreibungsabschnitte dem Verständnis des Verfahrens zum Herstellen des Faserverbundbauteils dienen.

In wenigstens einem Teilbereich des Faserverbundbauteils ist wenigstens ein Faden vorgesehen, der sich wellenförmig entlang eines Oberflächenbereiches des Verbundes derart erstreckt, wobei Abschnitte des Fadens abwechselnd innerhalb des Verbundes und außerhalb des Verbundes verlaufen.

Vorteilhaft besitzt das Faserverbundbauteil somit insgesamt keine mehr oder weniger glatte Oberfläche, sondern in einem Oberflächenbereich wenigstens eines Teilbereiches (welcher bei einer späteren Verklebung als Klebefläche vorgesehen werden kann) von dem Oberflächenbereich abstehende "Fadenschlaufen", welche von den außerhalb des Verbundes verlaufenden Fadenabschnitten gebildet sind.

Diese abstehenden "Fadenschlaufen" können bei einer späteren Verklebung des Faserverbundbauteils mit einem weiteren Faserverbundbauteil (oder mit einem andersartigen Bauteil) in der betreffenden Klebeschicht eingebettet und somit gewissermaßen formschlüssig darin verankert werden.

Dieser Formschluss ergänzt vorteilhaft die auf Adhäsion zwischen Klebeschicht und Klebepartnern beruhende Klebewirkung sowohl hinsichtlich der Festigkeit als auch der Zuverlässigkeit. Insbesondere stellt der Formschluss bei einem adhäsiven Versagen der Klebung eine gewisse Restfestigkeit und Rissstopperfunktion dar.

Als Matrixmaterial für das Faserverbundbauteil kommen insbesondere duroplastische Kunststoffe, also Harze bzw. Harzsysteme (z. B. Epoxidharzsysteme) in Betracht. Alternativ kann das Matrixmaterial jedoch auch von einem Thermoplasten gebildet sein.

Das im Matrixmaterial eingebettete Fasermaterial kann z. B. Kohlenstofffasern, Glasfasern oder andere Fasern enthalten, seien es kurze, z. B. wirr im Matrixmaterial angeordnete Fasern und/oder lange Fasern. In einer Ausführungsform ist das Fasermaterial von wenigstens einer textilen Lage gebildet bzw. enthält wenigstens eine solche textile Lage (z. B. Gelege, Geflecht, Gewebe, Rovings etc.). Entsprechende textile Halbzeuglagen sind aus dem Bereich der Faserverbundtechnologie wohlbekannt und können im Rahmen der Erfindung zwecks Herstellung des Faserverbundbauteils vorteilhaft mit ebenfalls an sich etablierten Verfahren mit zunächst noch flüssigem oder zähflüssigem Matrixmaterial infiltriert werden, welches im weiteren Verfahrensablauf ausgehärtet wird. Alternativ oder zusätzlich können bei der Herstellung des Faserverbundbauteils eine oder mehrere bereits mit unausgehärtetem Matrixmaterial vorimprägnierte textile Halbzeuglagen (so genannte "Prepregs") eingesetzt werden.

In einer Variante ist das Faserverbundbauteil als ein plattenförmiges oder schalenförmiges Faserverbundbauteil ausgebildet, z. B. mit einer minimalen Querabmessung, die größer als das 100fache, insbesondere größer als das 1000fache, der maximalen Dicke des Bauteils ist.

Insbesondere bei einem plattenförmigen oder schalenförmigen Faserverbundbauteil kann das Fasermaterial mehrere miteinander gestapelte textile Lagen (z. B. Gelege, Geflecht, Gewebe etc.) umfassen, etwa zur Realisierung von bestimmten Faserrichtungen bzw. Faserrichtungsverteilungen im Faserverbundbauteil.

Im einfachsten Fall besteht das Faserverbundbauteil lediglich aus dem ausgehärteten Matrixmaterial, dem darin eingebetteten Fasermaterial und dem wenigstens einen abschnittweise darin eingebetteten Faden. Alternativ kann das Faserverbundbauteil jedoch auch weitere Komponenten umfassen, insbesondere z. B. eine oder mehrere oberflächliche Decklagen und/oder eine oder mehrere im Inneren des Verbundes befindliche Zwischenlagen.

Es versteht sich, dass der oder die Fäden des Faserverbundbauteils lediglich dort zur oben bereits erläuterten Verbesserung einer Klebeverbindung erforderlich sind, an denen später tatsächlich eine solche Klebeverbindung geschaffen werden soll. Die Anordnung des oder der "Teilbereiche", an denen die Fadenschlaufen benötigt werden, kann also bei der Herstellung des Faserverbundbauteils an die gewünschte Anordnung der späteren Klebeverbindung(en) angepasst werden.

Insbesondere für relativ großformatige Faserverbundbauteile (z. B. Rumpfschalenteile für ein Flugzeug) kann es oftmals ausreichend sein, wenn die in dem oder den Teilbereichen liegende Oberfläche des Verbundes, welche mit den erwähnten "Fadenschlaufen" besetzt ist, weniger als 10%, insbesondere weniger als 5% der Gesamtoberfläche des Verbundes beansprucht. Grundsätzlich kommt es jedoch auch bei derartigen Strukturbauteilen eines Fahrzeuges, insbesondere z. B. Luftfahrzeuges, auf die jeweilige Anwendung bzw. die beabsichtigte "Klebegeometrie" an. Die erfindungsgemäß vorgesehene Verstärkung durch Fadenschlaufen bzw. "Tuftschlaufen" ist nur im Bereich der Klebung notwendig und ggf. dort auch nur an besonders kritischen Bereichen, d. h. wo in der Verwendungssituation mit Lastspitzen zu rechnen ist (z. B. Stringerauslauf).

Bei einem plattenförmigen oder schalenförmigen Faserverbundbauteil kann es z. B. zweckmäßig sein, wenn der Teilbereich (bzw. einer von mehreren Teilbereichen) an einem Rand des Faserverbundbauteils vorgesehen ist, etwa um an diesem Rand eine Verklebung mit einem weiteren plattenförmigen oder schalenförmigen Bauteil (z. B. Faserverbundbauteil) vorzusehen. Alternativ oder zusätzlich kann der Teilbereich bzw. ein weiterer Teilbereich auch entfernt vom Faserverbundbauteilrand vorgesehen sein, etwa im Hinblick auf eine Klebeanfügung von Anbauteilen (wie z. B. Spanten und Stringer an der Innenseite eines schalenförmigen Faserverbund-Rumpfbauteils).

Der Begriff "Faden" ist im Sinne der Erfindung sehr breit zu interpretieren und soll im Sinne der Erfindung jedes beliebige linienförmige textile Gebilde umfassen, also ein langes, dünnes Gebilde aus einer oder mehreren Fasern.

In einer Ausführungsform besteht der Faden aus nur einer einzigen Faser ("Monofilament").

In einer anderen Ausführungsform umfasst der Faden mehrere miteinander verdrehte und/oder anderweitig miteinander verbundene Fasern.

In einer anderen Ausführungsform umfasst der Faden mehrere parallel zueinander verlaufende Fasern (üblicherweise als "Roving" bezeichnet), z. B. mehr als 100 parallel zueinander verlaufende Fasern.

Wie bereits erläutert dienen die außerhalb des Verbundes verlaufenden Fadenabschnitte (Fadenschlaufen) der verbesserten Festigkeit bzw. Zuverlässigkeit einer Klebeverbindung, die durch eine Klebeschicht bewerkstelligt ist, in welcher die außerhalb des Verbundes befindlichen Fadenabschnitte (Fadenschlaufen) eingebettet sind.

Insofern ist es in der Regel zweckmäßig, wenn die außerhalb des Verbundes verlaufenden Fadenabschnitte jeweils eine Länge besitzen, die in der gleichen Größenordnung liegt, wie die Dicke der betreffenden Klebeschicht. Wenn diese Fadenabschnitte z. B. eine Länge besitzen, die der Dicke der Klebeschicht entspricht, so können die von den Fadenabschnitten gebildeten Fadenschlaufen bis in die Mitte der Klebeschicht reichen, was eine gute Verankerung ermöglicht. Je nach konkretem Verlauf der vom Verbund abstehenden Faserschlaufen können diese Faserschlaufen im vorstehenden Beispiel (Fadenabschnittlänge = Klebeschichtdicke) auch weniger weit in die Klebeschicht hineinragen.

In einer Ausführungsform ist vorgesehen, dass die außerhalb des Verbundes verlaufenden Fadenabschnitte jeweils eine Länge von mindestens 10%, insbesondere wenigstens 20% der vorgesehenen Klebeschichtdicke besitzen.

In einer Ausführungsform ist vorgesehen, dass die außerhalb des Verbundes verlaufenden Fadenabschnitte jeweils eine Länge von maximal 500%, insbesondere maximal 200% der vorgesehenen Klebeschichtdicke besitzen.

In einer Ausführungsform ist vorgesehen, dass die außerhalb des Verbundes verlaufenden Fadenabschnitte jeweils eine Länge von wenigstens 0,2 mm, insbesondere wenigstens 0,4 mm besitzen.

In einer Ausführungsform ist vorgesehen, dass die außerhalb des Verbundes verlaufenden Fadenabschnitte jeweils eine Länge von maximal 15 mm, insbesondere maximal 10 mm besitzen.

Der Faden sollte sowohl im Verbund als auch in der späteren Klebeschicht gut verankert sein. Insbesondere unter diesem Aspekt ist es bevorzugt, wenn der Faden zu wenigstens 20%, insbesondere wenigstens 30%, innerhalb des Verbundes verläuft und/oder der Faden zu wenigstens 30%, insbesondere wenigstens 40%, außerhalb der Verbundes verläuft.

Wie weit der Faden in den Verbund (z. B. mehrlagiges Laminat) reichen sollte, ist abhängig von der Anwendung. Diese Tiefe bestimmt, wie weit die Last z. B. im Versagensfall der Klebung über die Fadenschlaufen und die damit verbundenen Fadenabschnitte in den Verbund geleitet wird. Zu bedenken ist in diesem Zusammenhang allerdings, dass der Faden als solcher für die Verbundstruktur eine Störung darstellt. Oftmals ist es ausreichend und vorteilhaft, wenn der Faden nicht durch die gesamte Verbunddicke läuft, sondern z. B. nur weniger als 90% der Verbunddicke, insbesondere weniger als 70% der Verbunddicke, in den Verbund hineinreicht.

Darüber hinaus ist für die gewünschte Verbesserung der Klebeverbindung von Bedeutung, mit welcher Dichte die außerhalb des Verbundes verlaufenden Fadenabschnitte (Fadenschlaufen) über den bzw. die Oberflächenbereiche des bzw. der betreffenden Teilbereiche des Faserverbundbauteils verteilt angeordnet sind.

In einer Ausführungsform ist vorgesehen, dass die im Oberflächenbereich eines Teilbereiches außerhalb des Verbundes verlaufenden Fadenabschnitte mit einer Dichte von wenigstens 5.000/qm, insbesondere wenigstens 10.000/qm, vorgesehen sind.

Nach oben hin ist diese Dichte im Wesentlichen durch das technisch machbare begrenzt (und abhängig von der Dicke des verwendeten Fadens). In einer Ausführungsform ist vorgesehen, dass die vorgenannte Dichte maximal 300.000/qm, insbesondere maximal 200.000/qm beträgt.

Was die Fadendicke anbelangt, so sollte der Faden einerseits so dünn wie möglich sein, um die Verbundstruktur möglich wenig zu stören und darüber hinaus eine optimale Klebeschichtdicke realisieren zu können (oftmals bevorzugt im Bereich von 0,4 mm bis 0,6 mm). Andererseits müssen die Fadenschlaufen aber auch ausreichend fest und herstellbar bleiben.

In einer Ausführungsform ist vorgesehen, dass die Dicke des Fadens wenigstens 10 µm, insbesondere wenigstens 20 µm beträgt.

In einer Ausführungsform ist vorgesehen, dass die Dicke des Fadens maximal 0,5 mm, insbesondere maximal 0,1 mm beträgt.

In einer Ausführungsform ist vorgesehen, dass der Faden in dem Teilbereich geradlinig in dem Sinne verläuft, dass diejenigen Stellen des Oberflächenbereiches, an denen der wellenförmige Fadenverlauf die Verbundoberfläche quert, entlang einer geraden Linie liegen. Alternativ zu einem solchen geradlinigen Verlauf sind jedoch auch z. B. wellenförmige oder zick-zack-förmige Fadenführungen denkbar.

In einer Ausführungsform ist vorgesehen, dass in dem Teilbereich mehrere Fäden derart verlaufen, dass mehrere parallel zueinander entlang des Oberflächenbereiches verlaufende Fadenverläufe ausgebildet sind, z. B. mehrere jeweils geradlinige Fadenverläufe parallel zueinander (alternativ: z. B. mehrere jeweils wellenförmige oder zick-zack-förmige Fadenverläufe parallel zueinander). Alternativ zu einem solchen parallelen Verlauf mehrerer Fäden sind auch z. B. überkreuzende Fadenführungen denkbar, z. B. um eine großflächigere Lastverteilung zu ermöglichen.

Weiter beschrieben ist eine Klebeanordnung für Faserverbundbauteile, umfassend ein erstes Bauteil mit einer ersten Klebefläche, ein zweites Bauteil mit einer zweiten Klebefläche, und eine Klebeschicht zwischen der ersten Klebefläche und der zweiten Klebefläche zur Verklebung der beiden Bauteile miteinander, wobei das erste Bauteil und/oder das zweite Bauteil als ein Faserverbundbauteil der hier beschriebenen Art ausgebildet ist und außerhalb des Verbundes verlaufende Fadenabschnitte (Fadenschlaufen) des bzw. der Faserverbundbauteile in der Klebeschicht eingebettet sind.

In einer Variante der Klebeanordnung ist vorgesehen, dass sowohl das erste Bauteil als auch das zweite Bauteil als ein Faserverbundbauteil der hier beschriebenen Art ausgebildet ist, so dass in der Klebeschicht vorteilhaft außerhalb der beiden Verbünde verlaufende Fadenabschnitte beider Bauteile eingebettet sind. Der oder die Teilbereiche der beiden Faserverbundbauteile können hierbei korrespondierend zueinander derart angeordnet sein, dass damit in der Klebeanordnung ein oder mehrere korrespondierende (im Wesentlichen deckungsgleiche) Paare aus einer jeweils "ersten Klebefläche" und einer jeweils "zweiten Klebefläche" geschaffen sind.

Im Hinblick auf eine etwaige Klebeanbindung von Anbauteilen an dem bzw. den zu verklebenden Faserverbundbauteilen können am betreffenden Faserverbundbauteil auch ein oder mehrere Teilbereiche vorgesehen sein, die zur Verklebung von solchen (zusätzlichen) Anbauteilen vorgesehen sind.

Die Klebeschicht der Klebeanordnung kann aus einem beliebigen zum Kleben der betreffenden angrenzenden Materialien geeigneten Material bestehen, wobei selbstverständlich solche Materialien zu bevorzugen bzw. auszuwählen sind, welche eine besonders große Adhäsion gegenüber den in der Klebeanordnung angrenzenden Materialien bzw. Matrixmaterialien (bzw. gegebenenfalls Deckschichtmaterialien) aufweisen.

Als Klebstoffe sind im Rahmen der Erfindung sowohl physikalisch abbindende Klebstoffe wie Schmelzklebstoffe, als auch chemisch härtende Klebstoffe wie Polymerisationsklebstoffe, Polykondensationsklebstoffe, Polyadditionsklebstoffe etc. einsetzbar.

In einer Variante beträgt die Dicke der Klebeschicht wenigstens 0,05 mm und/oder maximal 10 mm.
Für strukturelle Klebungen von Strukturbauteilen eines Luftfahrzeuges sind Klebeschichtdicken im Bereich von 0,1 mm bis 0,7 mm besonders interessant. Das Festigkeitsoptimum liegt in der Regel bei ca. 0,5 mm. Jedoch kommen im Rahmen der Erfindung durchaus auch Klebstoffdicken bis ca. 4 mm und partiell darüber hinaus in Betracht (welche herkömmlich ausgeführt eine deutlich schlechtere Performance bieten).

Alle oben mit Bezug auf das Faserverbundbauteil bereits beschriebenen Varianten können in analoger Weise zur Ausgestaltung bzw. Weiterbildung der Klebeanordnung herangezogen werden.

Gemäß der Erfindung wird die eingangs gestellte Aufgabe gelöst durch die Merkmale des Anspruchs 1.

Hinsichtlich der Ausgestaltung des Fasermaterials sei auf die oben bei der Beschreibung des Faserverbundbauteils bereits gegebenen Erläuterungen verwiesen, etwa was die Art der Fasern (z. B. Kohlenstofffasern, Glasfasern etc.) als auch deren Anordnung (z. B. als einzelne Fasern oder als ein- oder mehrlagiges Textil) anbelangt.
Was die Reihenfolge der vorstehenden Schritte "a" bis "d" zur Herstellung des Faserverbundbauteils anbelangt, so ist gemäß einer Ausführungsform vorgesehen, dass diese Schritte in der Reihenfolge wie angegeben (also "a, b, c, d") durchgeführt werden.
In einer anderen Ausführungsform erfolgt der Schritt b, also das Einbringen des wenigstens einen Fadens in das Fasermaterial erst nach dem Schritt c, also erst nachdem das Fasermaterial bereits mit dem aushärtbaren Matrixmaterial infiltriert wurde. Gemäß dieser Ausführungsform ist also die Reihenfolge der Schritte b und c miteinander vertauscht (a, c, b, d). In diesem Fall können die Schritte a und c insofern auch durch in einem ersten Verfahrensschritt "zusammengefasst" bzw. durch einen solchen Schritt ersetzt sein, in welchem ein bereits mit Matrixmaterial infiltriertes Fasermaterial ("Prepreg") bereitgestellt wird.

Der Schritt b, also das Einbringen des wenigstens einen Fadens in das Fasermaterial, kann insbesondere so bewerkstelligt werden, wie dies als "Tuften" z. B. aus dem Bereich der Herstellung von Schlingenware (z. B. Teppichböden) bekannt ist.

Im Rahmen der Erfindung kann somit hinsichtlich des Schrittes b vorteilhaft auf sämtliche aus dem Bereich des Tuftens bereits bekannten Methoden und auch Werkzeuge zur Durchführung eines solchen Tuftens zurückgegriffen werden.
Das Tuften ist ein etabliertes Verfahren in der Textilindustrie zur Herstellung von Schlingenwaren wie z. B. Teppichböden. Dabei wird (wenigstens) ein Faden wiederholt mittels einer Nadel von einer Seite her durch ein flächiges Textil hindurchgestochen. Beispielsweise durch Reibung bleibt der Faden beim Herausziehen der Nadel im Textil und bildet an der anderen Seite des Textils eine Fadenschlaufe.

Bei dem Verfahren zur Herstellung eines Faserverbundbauteils kann ebenfalls das vorstehend beschriebene Tuften eingesetzt werden, also der Faden insbesondere mittels einer Nadel (oder eine Vielzahl von Fäden parallel zueinander mittels einer Mehrfachnadel) von einer Seite ("Unterseite") eines flächigen Fasermaterials (in Vertikalrichtung) durch das Fasermaterial gestochen werden, um an der gegenüberliegenden anderen Seite ("Oberseite") die gewünschten Fadenschlaufen des Fasermaterials auszubilden.
Ein Durchschneiden der einzelnen Fadenschlaufen, wie dies z. B. bei der Herstellung von so genannten Velours-Teppichböden vorgesehen ist, soll im Rahmen der Erfindung nicht ausgeschlossen sein, ist jedoch im Rahmen der Erfindung in der Regel überflüssig bzw. für die gewünschte Verbesserung der Klebeverbindung tendenziell eher kontraproduktiv.

Falls das herzustellende Faserverbundbauteil einen relativ dicken Verbund (aus ausgehärtetem Matrixmaterial und darin eingebettetem Fasermaterial) besitzen soll, so kann hierfür ein (unter Berücksichtigung einer späteren etwaigen Kompaktierung des Fasermaterials in einem Aushärteprozess) entsprechend dickes Fasermaterial, insbesondere z. B. ein mehrlagiges Laminat aus miteinander gestapelten Textillagen, bereitgestellt werden, in welches, vor oder nach Infiltration des Matrixmaterials, der (wenigstens eine) Faden eingebracht wird.

Ein in dieser Hinsicht oftmals vorteilhafteres Verfahren besteht jedoch darin, im Schritt a zunächst nur einen Teil des benötigten Fasermaterials bzw. der letztlich benötigten Fasermaterialdicke bereitzustellen und im weiteren Verfahrensablauf, erst nach dem Schritt b (Einbringen des Fadens), weiteres bzw. das restliche noch benötigte Fasermaterial an der "Unterseite" (entgegengesetzt zu der mit den Fadenschlaufen ausgestatteten Fasermaterialoberfläche bzw. -seite) anzufügen. Hierbei kann ebenfalls entweder trockenes oder bereits mit Matrixmaterial infiltriertes weiteres Fasermaterial angefügt werden (z. B. umfassend eine oder mehrere Textillagen), um erst sodann das gesamte Fasermaterial gemeinsam auszuhärten bzw. je nach Bedarf erst noch mit Matrixmaterial zu infiltrieren und dann auszuhärten.

In einer Ausführungsform wird im Schritt a das Fasermaterial zumindest an dem Oberflächenbereich des Teilbereiches, an welchem sich später der Faden erstreckt, mit einer Decklage (z. B. Trennfolie, oder z. B. so genannte Abreißlage) versehen bereitgestellt.

Mit einer derartigen Decklage lassen sich verschiedene Vorteile erzielen.

Zunächst kann eine solche Decklage das Fasermaterial bei dem im Verfahrensablauf später durchgeführten Schritt b (Einbringen des Fadens) insofern stabilisieren, als z. B. beim Durchstechen des Fasermaterials mit einer Nadel (Tuftnadel) die Fasern des Fasermaterials besser zusammengehalten werden.

Ferner kommt in Betracht, eine derartige Decklage bei dem im Verfahrensablauf später folgenden Schritt c (Infiltrieren des Fasermaterials) als eine Matrixmaterialbarriere zu nutzen, um ein Austreten des Matrixmaterials aus dem Fasermaterial hin zu den Fadenschlaufen an der Oberfläche zu vermeiden.

Ferner, falls die Decklage nicht als eine derartige Matrixmaterialbarriere wirkt und die Fadenschlaufen im Schritt c ebenfalls in Matrixmaterial eingebettet werden, so muss das die Fadenschlaufen umgebende Matrixmaterial nachträglich entfernt werden, wofür die Decklage nützlich sein kann (wie weiter unten noch beschrieben).

Schließlich, falls die Decklage als eine so genannte Abreißlage fungiert, d. h. nach dem Schritt d (Aushärten des Matrixmaterials) wieder von dem Verbund abgezogen wird, so kann bei entsprechender Strukturierung der Abreißlage eine entsprechende Strukturierung der Verbundoberfläche erzielt werden, die für eine gesteigerte Adhäsion der späteren Klebeschicht an der Verbundoberfläche sorgt.

Dementsprechend, falls im Schritt a, oder nachfolgend (jedoch vor dem Schritt b) der Oberflächenbereich des Fasermaterials im Teilbereich des Fasermaterials mit einer Decklage versehen bereitgestellt bzw. versehen wird, so ist in einer Weiterbildung vorgesehen, dass diese Decklage im Verfahrensablauf nach dem Schritt d (Aushärten des Matrixmaterials) wieder von dem Verbund abgezogen wird.

Falls die im Schritt b geschaffenen Fadenschlaufen im weiteren Verfahrensablauf mit Matrixmaterial umgeben werden, so ist gemäß einer Ausführungsform vorgesehen, dass im Schritt d auch dieses die Fadenschlaufen umgebende Matrixmaterial zunächst ausgehärtet wird und dieses die Fadenschlaufen umgebende Matrixmaterial nachträglich wieder entfernt wird.

In einer Ausführungsform ist hierfür z. B. vorgesehen, das die Fadenschlaufen umgebende ausgehärtete Matrixmaterial unter Zuhilfenahme eines Lasers zu entfernen, gegebenenfalls z. B. unterstützt durch ein Abziehen einer zuvor im Oberflächenbereich angeordneten Decklage (welche z. B. als Trennfolie und/oder Abreißlage fungiert).

Falls bei der Entfernung von ausgehärtetem Matrixmaterial mit einem Laser gearbeitet wird, so kann die Beschaffenheit bzw. das Material der gegebenenfalls vorhandenen Decklage so gewählt werden, dass die Decklage als eine Barriere für die betreffende Laserstrahlung und/oder die von der Laserstrahlung bewirkte Wärme wirkt, um das unterhalb der Decklage befindliche ausgehärtete Matrixmaterial vor einer Beschädigung durch den Laser bzw. die dadurch hervorgerufene Wärmeentwicklung zu schützen.

Ebenfalls beschrieben ist ein Verfahren zur Herstellung einer Klebeanordnung der hier beschriebenen Art, umfassend ein Bereitstellen eines ersten Bauteils mit einer ersten Klebefläche und eines zweiten Bauteils mit einer zweiten Klebefläche, wobei das erste Bauteil und/oder das zweite Bauteil als ein erfindungsgemäßes Faserverbundbauteil ausgebildet und/oder nach einem erfindungsgemäßen Verfahren zur Herstellung eines Faserverbundbauteils hergestellt wurde, und ein Verkleben der beiden Bauteile miteinander durch Vorsehen einer Klebeschicht zwischen der ersten Klebefläche und der zweiten Klebefläche, so dass außerhalb des Verbundes verlaufende Fadenabschnitte(Fadenschlaufen) des bzw. der Faserverbundbauteile in der Klebeschicht eingebettet werden.

Bei dem Bereitstellen der beiden Bauteile kann, soweit dies die Bereitstellung eines erfindungsgemäßen Faserverbundbauteils betrifft, auf die Ausgestaltungen und Weiterbildungen zurückgegriffen werden, die oben bereits mit Bezug auf das erfindungsgemäße Faserverbundbauteil und/oder das erfindungsgemäße Verfahren zur Herstellung eines Faserverbundbauteils beschrieben wurden.

Das Verkleben kann z. B. in üblicher Weise so erfolgen, dass eine Klebeschicht auf einer oder beiden Klebeflächen aufgebracht und sodann die beiden Bauteile an den Klebeflächen aneinandergefügt werden, gegebenenfalls unter Anwendung von Druck und z. B. einer erhöhten Temperatur.

Gemäß eines weiteren Aspekts der Erfindung wird eine Verwendung der beschriebenen Klebeanordnung zur Schaffung einer festen Struktur eines Fahrzeuges, insbesondere Luftfahrzeuges vorgeschlagen.

Die Erfindung wird nachfolgend anhand von Ausführungsbeispielen mit Bezug auf die beigefügten Zeichnungen weiter beschrieben. Es stellen dar:
Fig. 1 eine schematische Darstellung zur Veranschaulichung einer Einbringung eines Fadens in ein Fasermaterial ("Tuften"),
Fig. 2 eine der Fig. 1 entsprechende Darstellung nach Anfügung weiterer Fasermateriallagen,
Fig. 3 eine der Fig. 2 entsprechende Darstellung nach Infiltration mit Matrixmaterial und Aushärtung desselben,
Fig. 4 eine der Fig. 3 entsprechende Darstellung während eines Entfernens von ausgehärtetem Matrixmaterial zwecks Freilegung von Fadenschlaufen,
Fig. 5 eine schematische Darstellung zur Veranschaulichung einer Klebeanordnung umfassend zwei gemäß der Fig. 1 bis 4 hergestellte Faserverbundbauteile, die über eine Klebeschicht miteinander verklebt wurden, und
Fig. 6 eine der Fig. 5 entsprechende Darstellung zur Veranschaulichung einer Rissstopperfunktionalität von in der Klebeschicht eingebetteten Faserschlaufen.

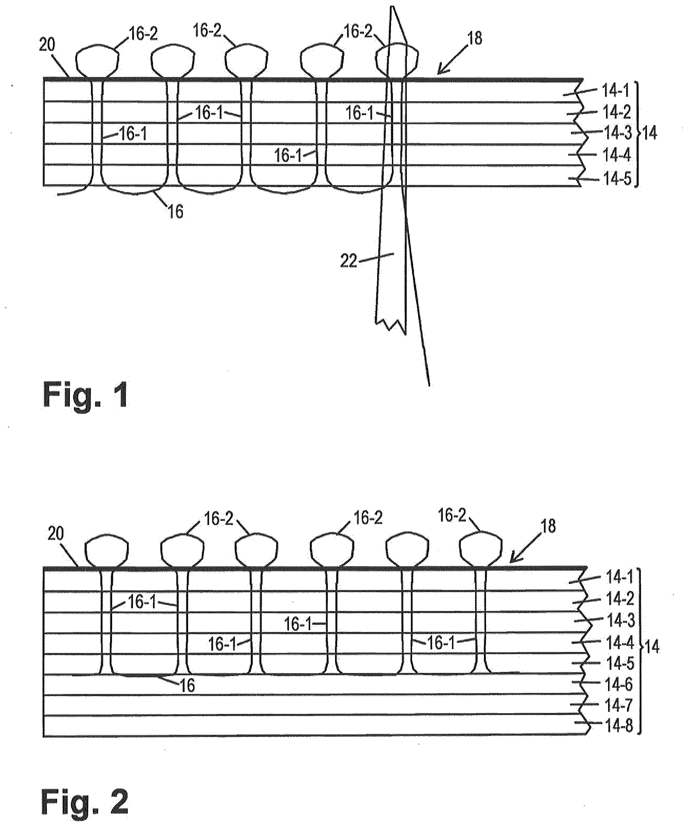

Die Fig. 1 bis 4 veranschaulichen schematisch ein Ausführungsbeispiel eines Verfahrens zur Herstellung eines Faserverbundbauteils 10.

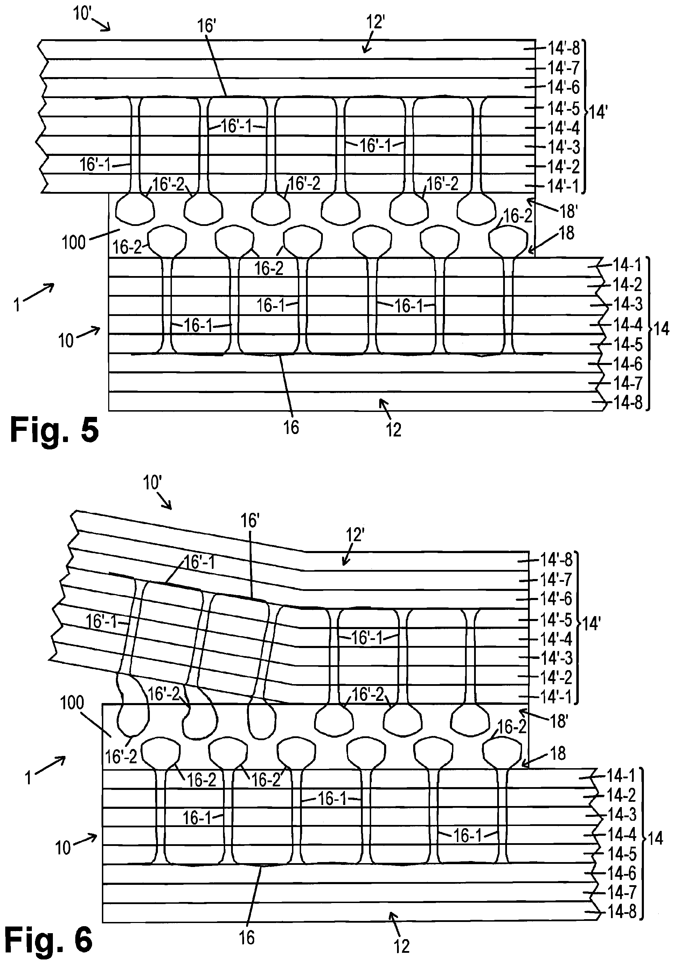

In Fig. 5 ist das fertige Faserverbundbauteil 10 ersichtlich, und zwar in einer Verwendungssituation, bei welcher es über eine Klebeschicht 100 mit einem gleichartig hergestellten zweiten Faserverbundbauteil 10' verklebt ist (Klebeanordnung 1).

Das Faserverbundbauteil 10 (vgl. Fig. 5) umfasst in herkömmlicher Weise einen Verbund 12 aus ausgehärtetem Matrixmaterial (hier z. B. ein thermisch ausgehärtetes Epoxidharzsystem) und darin eingebettetem Fasermaterial 14.

Das Fasermaterial 14 ist im dargestellten Ausführungsbeispiel aus acht textilen Lagen 14-1 bis 14-8 gebildet. Diese Anzahl an Lagen ist selbstverständlich lediglich beispielhaft zu verstehen und kann in der Praxis abhängig von der Anwendung stark variieren.

Eine Besonderheit des Faserverbundbauteils 10 besteht darin, dass in wenigstens einem Teilbereich (in Fig. 5 der benachbart der Klebeschicht 100 befindliche Bereich) des Faserverbundbauteils 10 wenigstens ein Faden 16 vorgesehen ist, der sich wellenförmig entlang eines Oberflächenbereiches 18 des Verbundes 12 derart erstreckt, dass Abschnitte des Fadens 16 abwechselnd innerhalb des Verbundes 12 und außerhalb des Verbundes 12 verlaufen. In Fig. 5 sind die innerhalb des Verbundes 12 verlaufenden Fadenabschnitte mit 16-1 und die außerhalb des Verbundes 12 verlaufenden Fadenabschnitte mit 16-2 bezeichnet.

Bei der Klebeanordnung 1 von Fig. 5 sind die außerhalb des Verbundes verlaufenden Fadenabschnitte 16-2 vorteilhaft in der Klebeschicht 100 eingebettet, so dass die Adhäsion der Klebeschicht 100 gegenüber dem Oberflächenbereich 18 im Hinblick auf die Festigkeit und Zuverlässigkeit der Klebeverbindung durch die formschlüssige Einbettung der Fadenabschnitte 16-2 ergänzt wird.

Mit Bezug auf die Fig. 1 bis 4 lässt sich das Verfahren zu Herstellung des Faserverbundbauteils 10 wie folgt beschreiben:
In einem ersten Schritt wird ein Fasermaterial bereitgestellt. Im dargestellten Beispiel (vgl. Fig. 1) sind dies lediglich die textilen Halbzeuglagen 14-1 bis 14-5, wobei dieser Fasermaterialstapel zumindest in demjenigen Teilbereich, welcher den späteren Oberflächenbereich 18 ausbildet, mit einer Trennfolie 20 versehen wird.

Im dargestellten Beispiel handelt es sich bei dem Fasermaterial um trockenes, d.h. noch kein Matrixmaterial enthaltendes Fasermaterial. Alternativ könnten eine, mehrere oder sämtliche der in diesem Verfahrensstadium bereitgestellten textilen Halbzeuglagen 14-1 bis 14-5 jedoch auch als Prepregs vorgesehen sein (die im weiteren Verfahrensablauf dann nicht mehr mit Matrixmaterial zu infiltrieren sind).

In einem zweiten Schritt wird der wenigstens eine Faden 16 derart in das bereitgestellte Fasermaterial 14-1 bis 14-5 eingebracht, dass der Faden 16 sich wellenförmig entlang des Oberflächenbereiches 18 derart erstreckt, dass Fadenabschnitte abwechselnd innerhalb des Fasermaterials 14-1 bis 14-5 und außerhalb des Fasermaterials 14-1 bis 14-5 verlaufen. Die innerhalb und außerhalb des Fasermaterials verlaufenden Fadenabschnitte sind in Fig. 1 (entsprechend Fig. 5) wieder mit 16-1 bzw. 16-2 bezeichnet.

Das Einbringen des Fadens 16 erfolgt wie beim "Tuften", d. h. der Faden 16 wird mittels einer Nadel 22 von einer Flachseite des Fasermaterials 14-1 bis 14-5 (in Fig. 1 von unten her) durch das Fasermaterial hindurchgestochen, wobei die Nadel 22 so weit (in Fig. 1 nach oben) geführt wird, dass beim nachfolgenden Zurücklaufen der Nadel 22 eine "Fadenschlaufe" 16-2 gebildet wird. Sodann wird die Nadel 22 in Fig. 1 ein Stück weit nach rechts geführt und das Durchstechen und wieder Zurückziehen der Nadel 22 zur Ausbildung der nächsten Fadenschlaufe 16-2 wiederholt sich.
Durch diesen "Tuftvorgang" lässt sich mittels des Fadens 16 die gewünschte Anzahl an Fadenschlaufen 16-2 im betreffenden Teilbereich erzeugen. Wie beim Tuften von Schlingenware (z. B. Teppichböden) kann mit einer Mehrfachnadel bzw. Nadelreihe (die sich in Fig. 1 orthogonal zur Zeichenebene erstreckt) gleichzeitig eine entsprechende Mehrzahl von Fäden 16 eingebracht werden, wobei mit jedem Hub der Mehrfachnadel eine entsprechende Mehrzahl von Fadenschlaufen 16-2 ausgebildet wird.

In den Figuren ist der Einfachheit halber lediglich ein solcher Faden 16 dargestellt.

Sodann wird, wie in Fig. 2 dargestellt, das "getuftete" aus den Halbzeuglagen 14-1 bis 14-5 gebildete Fasermaterial an der Unterseite (den Fadenschlaufen 16-2 abgewandt) mit den restlichen, für das Faserverbundbauteil 10 noch benötigten Halbzeuglagen 14-6 bis 14-8 ergänzt.

Im dargestellten Beispiel handelt es sich den Halbzeuglagen 14-6 bis 14-8 um trockenes, d.h. noch kein Matrixmaterial enthaltendes Fasermaterial. Alternativ könnten eine, mehrere oder sämtliche der in diesem Verfahrensstadium auf der den Fadenschlaufen 16-2 abgewandten Seite hinzugefügten textilen Halbzeuglagen 14-6 bis 14-8 jedoch auch als Prepregs vorgesehen sein (die im weiteren Verfahrensablauf dann nicht mehr mit Matrixmaterial zu infiltrieren sind).

Soweit die Halbzeuglagen 14-1 bis 14-8 in dieser Situation noch nicht mit Matrixmaterial infiltriert sind, erfolgt sodann eine entsprechende Infiltration dieser Halbzeuglagen mit aushärtbarem Matrixmaterial (hier: z. B. Epoxidharzsystem). Dies vorzugsweise in einem hierfür eingesetzten Infiltrations- und Formwerkzeug, wie es aus dem Bereich der Faserverbundtechnologie hinreichend bekannt ist.

Im dargestellten Ausführungsbeispiel wird das in der Situation gemäß Fig. 2 noch trockene Fasermaterial mitsamt der Trennfolie 20 in ein geeignetes Infiltrations- und Aushärtewerkzeug eingelegt und dort infiltriert und thermisch ausgehärtet.

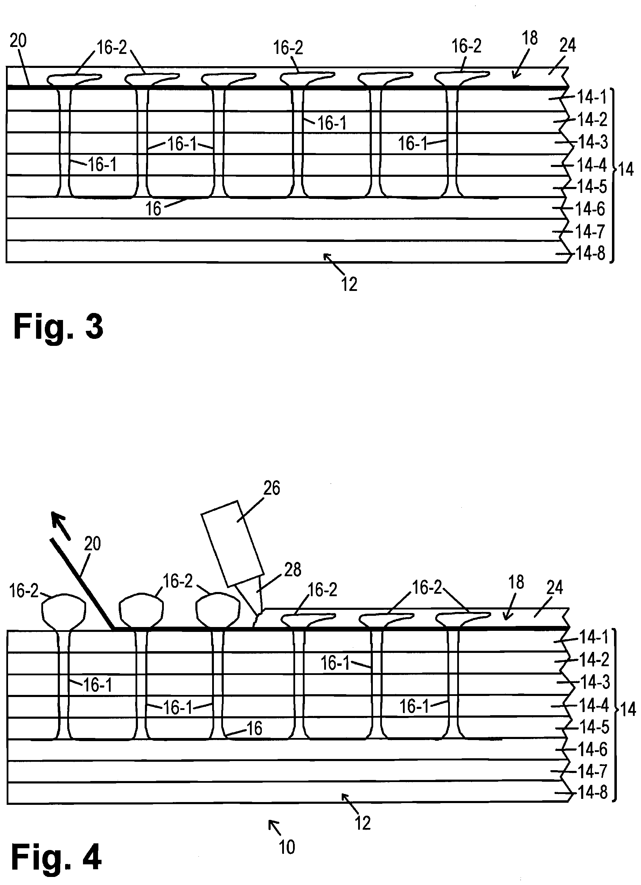

Wie in Fig. 3 ersichtlich erfolgt dies so, dass nicht nur die Halbzeuglagen 14-1 bis 14-8 infiltriert werden, sondern auch die an der Oberseite abstehenden Fadenschlaufen 16-2 in dem zugeführten Matrixmaterial eingebettet werden. In Fig. 3 ist die überhalb der Trennfolie 20 geschaffene und die Fadenschlaufen 16-2 einbettende Matrixmaterialschicht ersichtlich und mit 24 bezeichnet.

Bei der Aushärtung des Matrixmaterials im betreffenden Formwerkzeug härtet dementsprechend auch die oberflächliche Matrixmaterialschicht 24 aus.

Diese über der Trennfolie befindliche Matrixmaterialschicht 24 wird nachträglich wieder entfernt, um damit die Fadenschlaufen 16-2 am Oberflächenbereich 18 wieder freizulegen.

Fig. 4 veranschaulicht das Freilegen der Fadenschlaufen 16-2 unter Verwendung eines eines UV-Lasers 26, dessen UV-Laserstrahlung 28 beispielsweise abtastend derart über die Matrixmaterialschicht 24 geführt wird, dass diese an den betreffenden Stellen abplatzt und die Fadenschlaufen 16-2 somit vom Harz befreit werden. Im dargestellten Beispiel wird dabei gleichzeitig wie in Fig. 4 veranschaulicht die Trennfolie 20 abgezogen, durch welche hindurch zuvor die Fadenschlaufen 16-2 hindurchragten (Die Trennfolie besitzt ein relativ geringes Adhäsionsvermögen gegenüber dem verwendeten Matrixmaterial, was deren Abtrennung vom darunterliegenden Matrixmaterial vereinfacht).

Für das beschriebene Laserabtragen der oberflächlichen Matrixmaterialschicht (vgl. z. B. Harzschicht 24 in Fig. 4) kommen im Rahmen der Erfindung verschiedene Arten von Lasern in Betracht. Bei Verwendung eines UV-Lasers kann die Laserstrahlungsenergie z. B. überwiegend im Matrixmaterial absorbiert werden (z. B. im Falle eines Epoxidharzsystems als Matrixmaterial), wodurch dieses Material schonend abgetragen (z. B. verdampft) werden kann. Alternativ oder zusätzlich kann z. B. ein IR-Laser verwendet werden, dessen Strahlungsenergie z. B. bei Verwendung von Kohlenstofffasern für die Fäden sehr stark von den Fäden absorbiert wird. Zumeist ist es günstig, wenn auch das Matrixmaterial, welches während des Aushärteprozesses und/oder zuvor z. B. durch die Kapillarwirkung in die Fadenschlaufen gelangt ist, wieder entfernt wird, um die Schlaufen wieder möglichst flexibel zu bekommen. Die Flexibilität bzw. Freiheit der Schlaufen von Matrixmaterial kann insofern vorteilhaft sein, als beim späteren Verklebungsprozess der Klebstoff dann besser in die Fadenschlaufen eindringen kann. Die ggf. verwendete(n) Decklage(n) können vorteilhaft auch dazu dienen, dass durch das Lasern der Basisverbund (z. B. Laminat) weniger beeinflusst wird und möglichst nur die Fadenschlaufen von Matrixmaterial (z. B. Harz) befreit werden.

Sobald die Fadenschlaufen 16-2 somit wieder freigelegt und die Trennfolie 20 abgezogen wurde, ist das Faserverbundbauteil 10 fertig gestellt.

In dieser Weise können insbesondere z. B. plattenförmige oder schalenförmige Faserverbundbauteile hergestellt werden, etwa als nachträglich mit einem oder mehreren weiteren Bauteilen (z. B. Faserverbundbauteile, oder aber andersartige Bauteile) verklebt werden können. Die am Faserverbundbauteil vorstehenden Fadenschlaufen können hierbei der betreffenden Klebeanordnung angepasst in einem oder mehreren jeweils zusammenhängenden Oberflächenbereichen (vgl. in den Figuren beispielhaft dargestellter Oberflächenbereich 18) vorgesehen werden, so dass diese Fadenschlaufen vorteilhaft in der betreffenden Klebeschicht eingebettet und somit für eine zusätzliche Anbindung des oder der Oberflächenbereiche an der oder den betreffenden Klebeschichten realisieren.

Fig. 5 zeigt, wie bereits erwähnt, eine derartige Klebeanordnung 1, bei welcher z. B. zur Ausbildung einer größeren flächigen Struktur (z. B. Außenhautstruktur eines Flugzeuges) zwei plattenförmige bzw. schalenförmige Bauteile 10, 10' an ihren in Fig. 5 dargestellten Randbereichen überlappend über die Klebeschicht 100 verklebt wurden. Es handelt sich im Beispiel gemäß Fig. 5 einerseits um das hinsichtlich seiner Herstellung bereits beschriebene Faserverbundbauteil 10 sowie das in gleicher Weise hergestellte Faserverbundbauteil 10'. Die Ausgestaltung des zweiten Faserverbundbauteils 10' entspricht derjenigen des bereits beschriebenen Faserverbundbauteils 10. In den Figuren sind die entsprechenden Komponenten des zweiten Faserverbundbauteils 10' mit den gleichen Bezugszahlen, jedoch ergänzt mit einem Apostroph, bezeichnet.

Zur Herstellung der in Fig. 5 dargestellten Klebeanordnung 1 werden zunächst die beiden Bauteile 10, 10' in der bereits beschriebenen Weise hergestellt, wobei der oder die Teilbereiche, an denen jeweils ein Oberflächenbereich 18 bzw. 18' mit abstehenden Fadenschlaufen 16-2 bzw. 16'-2 entstehen sollen, in Anpassung an die gewünschte Gestaltung der Klebeanordnung 1 vorgesehen werden.

Sodann wird ein geeigneter Klebstoff z. B. an den betreffenden Oberflächenbereichen 18, 18' eines der Bauteile 10, 10' aufgetragen und das andere Bauteil 10', 10 entsprechend angefügt und zumindest im Bereich der Verklebung angepresst und der Klebstoff abgebunden bzw. (z. B. thermisch unterstützt) ausgehärtet.

Beim Verkleben der Bauteile 10, 10' ragen die in korrespondierend zueinander angeordneten Teilbereichen der beiden Bauteile 10, 10' vorgesehenen Fadenschlaufen 16-2, 16'-2 vorteilhaft von beiden Seiten her in die Klebeschicht 100 hinein, wie in Fig. 5 veranschaulicht.

Bei diesem nachgeschalteten Klebeprozess (strukturelles bzw. sekundäres Verkleben) umfließt der betreffende Klebstoff die Fadenschlaufen 16-2, 16'-2, so dass nach Abbinden bzw. Aushärten des Klebstoffes neben der Adhäsion der Klebeschicht 100 zu den angrenzenden Oberflächenbereichen hin auch ein Formschluss der Fadenschlaufen 16-2, 16'-2 im umgebenden Matrixmaterial aufgebaut wird. Dieser Formschluss stellt bei einem adhäsiven Versagen der Klebung vorteilhaft eine gewisse Restfestigkeit und somit Rissstopperfunktion bereit, wie dies in Fig. 6 veranschaulicht ist.

In Fig. 6 ist eine Situation dargestellt, in welcher die Adhäsion der Klebeschicht 100 zum Bauteil 10' hin versagt, die von dem Bauteil 10' in die Klebeschicht 100 hineinragenden Fadenschlaufen 16'-2 jedoch ein Fortschreiten eines Risses hemmen.

## Patentansprüche

1. Verfahren zur Herstellung eines Faserverbundbauteils (10)
wobei das Faserverbundbauteil (10) umfasst: einen Verbund (12) aus ausgehärtetem Matrixmaterial und darin eingebettetes Fasermaterial (14),
wobei in wenigstens einem Teilbereich des Faserverbundbauteils (10) wenigstens ein Faden (16) vorgesehen ist, der sich wellenförmig entlang eines Oberflächenbereiches (18) des Verbundes (12) derart erstreckt, dass Abschnitte (16-1, 16-2) des Fadens (16) abwechselnd innerhalb des Verbundes (12) und außerhalb des Verbundes (12) verlaufen,
wobei das Verfahren die folgenden Schritte umfasst:
a) Bereitstellen eines Fasermaterials (14),
b) Einbringen in wenigstens einem Teilbereich des Fasermaterials (14) wenigstens eines Fadens (16) derart, dass der Faden (16) sich wellenförmig entlang eines Oberflächenbereiches (18) des Fasermaterials (14) derart erstreckt, dass Abschnitte (16-1, 16-2) des Fadens (16) abwechselnd innerhalb des Fasermaterials (14) und außerhalb des Fasermaterials (14) verlaufen,
c) Infiltrieren des Fasermaterials (14) mit einem aushärtbaren Matrixmaterial, und
d) Aushärten des Matrixmaterials
**dadurch gekennzeichnet, dass** in Schritt b) wenigstens ein Faden wiederholt mittels einer Nadel von einer Seite her durch den Fasermaterial hindurchgestochen wird.

2. Verfahren nach Anspruch 1, wobei im Schritt a) das Fasermaterial (14) wenigstens im genannten Oberflächenbereich (18) mit einer Trennfolie (20) versehen bereitgestellt wird.

3. Verfahren nach Anspruch 1 oder 2,
wobei der wenigstens eine Faden so eingebracht wird, dass die außerhalb des Verbundes verlaufenden Fadenabschnitte (16-2) jeweils eine Länge von wenigstens 0,2 mm, insbesondere wenigstens 0,4 mm, besitzen.

4. Verfahren nach einem der Ansprüche 1 bis 3,
wobei der wenigstens eine Faden (16) so eingebracht wird, dass er zu wenigstens 20%, insbesondere wenigstens 30%, innerhalb des Verbundes (12) verläuft und/oder der wenigstens eine Faden (16) zu wenigstens 30%, insbesondere wenigstens 40%, außerhalb der Verbundes (12) verläuft.

## Claims

1. Process for the production of a fibre-composite component (10)
where the fibre-composite component (10) comprises a composite (12) made of hardened matrix material, and comprises fibre material (14) embedded therein, where in at least one subregion of the fibre-composite component (10) there is at least one thread (16) provided which extends in undulating form along a surface region (18) of the composite (12) in a manner such that sections (16-1, 16-2) of the thread (16) are alternately within the composite (12) and outside of the composite (12),
where the process comprises the following steps:
a) provision of a fibre material (14),
b) introduction, in at least one subregion of the fibre material (14), at least of one thread (16) in a manner such that the thread (16) extends in undulating form along a surface region (18) of the fibre material (14) in a manner such that sections (16-1, 16-2) of the thread (16) are alternately within the fibre material (14) and outside of the fibre material (14),
c) infiltration of a hardenable matrix material into the fibre material (14), and
d) hardening of the matrix material,
**characterized in that** in step b) at least one thread is repeatedly inserted from a side through the fibre material by means of a needle.

2. Process according to Claim 1, where in step a) the fibre material (14) is provided after provision of a release film (20) thereto, at least in the surface region (18) mentioned.

3. Process according to Claim 1 or 2,
where the at least one thread is introduced in a manner such that the length of the thread sections (16-2) which are outside of the composite is in each case at least 0.2 mm, in particular at least 0.4 mm.

4. Process according to any of Claims 1 to 3,
where the at least one thread (16) is introduced in a manner such that at least 20% thereof, in particular at least 30%, is within the composite (12) and/or at least 30% of the at least one thread (16), in particular at least 40%, is outside of the composite (12).

## Revendications

1. Procédé pour la fabrication d'une pièce composite fibreuse (10), la pièce composite fibreuse (10) comprenant : un composite (12) constitué par un matériau de matrice durci et un matériau fibreux (14) qui y est incorporé, au moins un fil (16), disposé dans au moins une zone partielle de la pièce composite fibreuse (10), s'étendant de manière ondulée le long d'une zone surfacique (18) du composite (12) de manière telle que des sections (16-1, 16-2) du fil (16) s'étendent en alternance dans le composite (12) et en dehors du composite (12),
le procédé comprenant les étapes suivantes :
a) mise à disposition d'un matériau fibreux (14),
b) introduction d'au moins un fil (16) dans au moins une zone partielle du matériau fibreux (14) de manière telle que le fil (16) s'étend de manière ondulée le long d'une zone surfacique (18) du matériau fibreux (14) de manière telle que des sections (16-1, 16-2) du fil (16) s'étendent en alternance à l'intérieur du matériau fibreux (14) et en dehors du matériau fibreux (14),
c) infiltration du matériau fibreux (14) par un matériau de matrice durcissable et
d) durcissement du matériau de matrice **caractérisé en ce que**, dans l'étape b), au moins un fil est piqué de manière répétée au moyen d'une aiguille depuis un côté à travers le matériau fibreux.

2. Procédé selon la revendication 1, le matériau fibreux (14) dans l'étape a) étant mis à disposition en étant pourvu d'une feuille de séparation (20) au moins dans la zone surfacique (18) mentionnée.

3. Procédé selon la revendication 1 ou 2, ledit au moins un fil étant introduit de manière telle que les sections de fil (16-2) s'étendant en dehors du composite présentent à chaque fois une longueur d'au moins 0,2 mm, en particulier d'au moins 0,4 mm.

4. Procédé selon l'une quelconque des revendications 1 à 3, ledit au moins un fil (16) étant introduit de manière telle qu'il s'étend à raison d'au moins 20%, en particulier d'au moins 30%, à l'intérieur du composite (12) et/ou ledit au moins un fil (16) s'étendant à raison d'au moins 30%, en particulier d'au moins 40%, en dehors du composite (12).
